# EUROPÄISCHE PATENTSCHRIFT

(11) **EP 0 717 115 B1**
(45) Veröffentlichungstag und Bekanntmachung des Hinweises auf die Patenterteilung: **17.11.1999**
(21) Anmeldenummer: 95117126.3
(22) Anmeldetag: 31.10.1995
(51) Int. Cl.: C21C 5/52, F27B 3/04, C21C 5/35

(54) **Verfahren und Vorrichtung zum Betreiben eines Doppelgefäss-Lichtbogenofens**
Process and installation for running a twin-vessel arc furnace
Procédé et installation pour opérer un four à arc à deux cuves

(30) Priorität: 17.12.1994 DE 4445209
(43) Veröffentlichungstag der Anmeldung: 19.06.1996
(73) Patentinhaber: SMS SCHLOEMANN-SIEMAG AKTIENGESELLSCHAFT, 40237 Düsseldorf (DE)
(72) Erfinder: Hübers, Andreas, Dipl.-Ing., D-45529 Hattingen (DE); Schneider, Karl-Josef, Dipl.-Ing., D-46514 Schermbeck (DE)
(74) Vertreter: Valentin, Ekkehard, Dipl.-Ing.

(56) Entgegenhaltungen:
- EP-A- 0 215 386
- EP-A- 0 483 322
- EP-A- 0 608 591
- DE-A- 1 433 424
- DE-A- 3 232 139
- US-A- 3 812 275
- US-A- 5 286 277

## Beschreibung

Die Erfindung betrifft ein Verfahren und eine Vorrichtung zum Betreiben eines Doppelgefäß-Lichtbogenofens, zur Stahlerzeugung, wobei die Ofengefäße I und II durch Ofendeckel verschließbar sind, mit auf einem schwenkbaren Ofendeckel angeordneten Elektroden, mit Einblaslanzen für Sauerstoff, Feinkalk, Kohle, gasförmigen oder flüssigen Brennstoffen, wobei zur Durchführung des Verfahrens eines der beiden Ofengefäße, I oder II, vollständig vom Stromnetz getrennt wird, das zweite Gefäß jedoch am Stromnetz verbleibt; daß das vom Stromnetz genommene Ofengefäß mit flüssigem Roheisen, Schrott und anderen metallischen Einsatzstoffen beschickt und anschließend mit einem Ofendeckel verschlossen und mit Sauerstoff gefrischt wird und daß das am Stromnetz befindliche Ofengefäß weitere metallurgische Arbeiten, wie Einschmelzen und Überhitzen mittels Elektroden bis zum Abstich der Schmelze, durchführt.

Für die Rohstahlerzeugung sind eine Reihe von Verfahrenswegen bekannt, die über den klassischen Weg Hochofen - Konverter überwiegend heißes, flüssiges Roheisen in Kombination mit Schrott, Erz, Eisenschwamm u. a. metallischen Einsatzstoffen verwenden und Schmelzgefäße, beispielsweise Elektro-Lichtbogenöfen, bei denen überwiegend kalte bzw. vorgewärmte Einsatzstoffe, wie Schrott und Eisenschwamm, zum Einsatz kommen.

Elektro-Lichtbogenöfen werden überwiegend als Einzelaggregate verwendet und betrieben.

In den letzten Jahren sind Ofenanlagen entwickelt worden, die wegen der sich verschärfenden Knappheit von Ressourcen an Energie und Einsatzstoffen eine kostengünstige und umweltfreundliche Stahlerzeugung zum Ziel hatten.

Hierzu zählen die bekannten Maßnahmen, beim Betrieb von Elektro-Lichtbogenöfen, aus dem Elektroofen abgesaugte, heiße Rauchgase zur Vorwärmung des Chargiergutes, in der Regel Schrott, zu verwenden.

Aus der EP 0 483 322 ist ein Einschmelzaggregat mit zwei nebeneinander angeordneten Schmelzgefäßen bekannt, das mit einer Heizeinrichtung für die Zufuhr von Schmelzenergie und zwei nebeneinander angeordneten Schmelzöfen aus jeweils einem durch einen Gefäßdeckel verschließbaren Ofengefäß ausgerüstet ist, wobei jeder Schmelzofen zwei Gasdurchtrittsöffnungen sowie absperrbare Gasleitungen aufweist, welche jeweils eine Gasdurchtrittsöffnung des einen Schmelzofens mit einer Gasdurchtrittsöffnung des anderen Schmelzofens verbinden, so daß zum Vorheizen von metallischem Einsatzmaterial die beim Schmelzprozeß entstehenden Ofengase des einen Schmelzofens in den jeweils anderen Schmelzofen eingeleitet werden können, wobei bei jedem Schmelzofen an einer Seite ein äußeres Segment des Gefäßdeckels durch einen, in einer Haltekonstruktion befestigten Schacht ersetzt ist, der in seinem oberen Bereich eine verschließbare Beschickungsöffnung für das Einsatzmaterial und eine Gasdurchtrittsöffnung des betreffenden Schmelzofens aufweist.

Aus der DE 43 02 285 A1 ist ein Verfahren und Einrichtung zum Betreiben einer Zweiofenanlage bekannt.

In dieser Stahlwerksanlage mit Doppelofeneinrichtung soll Stahl erschmolzen werden, wobei das Verfahren durch folgende Schritte gekennzeichnet ist:

Es wird einer der beiden Öfen zum Einschmelzen des darin befindlichen Schrottes mit elektrischem Strom versorgt und der andere wird vollständig vom Netz getrennt;
der vom Stromnetz genommene und abgestochene Ofen wird mit Beschickungsmaterial, überwiegend Schrott, chargiert;
anschließend wird das Ofengefäß mit einem Deckel verschlossen;
danach wird das im Gefäßraum befindliche Gas oberhalb der Schrottsäule abgesaugt.

Über eine zwischen beiden Öfen vorgesehene Verbindungsleitung wird das Rauchgas aus dem im elektrischen Betrieb befindlichen Ofen durch den vom Stromnetz getrennten Ofen abgesaugt, wobei während des Absaugens des Rauchgases aus dem vom Stromnetz getrennten Ofen die Rauchgasverbindung des anderen Ofens zur Gasreinigung unterbrochen wird.

Der Einsatz von festem Roheisen im Lichtbogenofen ist wegen der langen Aufschmelzzeit der Masseln mengenmäßig beschränkt, die Verarbeitung (Frischen) von flüssigem Roheisen ist im Elektro-Lichtbogenofen bisher nicht zufriedenstellend gelöst worden.

Auch die beiden bekannten Doppelofenanlagen sind für die Verarbeitung von flüssigem Roheisen, insbesondere für hohe Einsatzbereiche, die bis über die Hälfte des metallischen Einsatzes hinausgehen können, in keiner Weise geeignet und auch dafür nicht konzipiert.

Die Aufgabe der Erfindung besteht deshalb darin, ein Verfahren und eine Vorrichtung zu schaffen, bei der in einer Doppelofenanlage energiesparend, umweltschonend, kostengünstig und den verfügbaren Rohstoffen/Energien entsprechend Stahl erzeugt wird, wobei flüssiges Roheisen in einer Größenordnung von 50 % und mehr des festen Einsatzmaterials, beispielsweise Eisenschwamm, Erz, Schrott u. a. metallische Einsatzstoffe, verwendet wird.

Die Lösung der Aufgabe erfolgt durch die kennzeichnenden Merkmale der Ansprüche 1 und 2, die Unteransprüche betreffen eine weitere vorteilhafte Ausgestaltung der Vorrichtung.

Erfindungsgemäß wird der Doppelgefäß-Lichtbogenofen, der durch schwenkbare Ofendeckel verschließbar ist, mit einer Hochstromzuführung vom Transformator zu dem auf einer Schwenkvorrichtung angeordneten Elektroden ausgerüstet.

Beide schwenkbaren Ofendeckel weisen in der Mitte eine runde Öffnung auf, durch die die Elektroden in das Ofengefäß eingefahren werden. Diese runden Öffnungen werden bei Bedarf durch einen an einer verfahrbaren Tragvorrichtung befestigten Zusatzdeckel verschlossen, der selbst eine mittig angeordnete Öffnung aufweist, durch die eine Blaslanze in das Ofengefäß abgesenkt werden kann.

Die Sauerstoffblaslanzen, hier sogenannte Top-Lanzen, werden mittig durch den Ofendeckel geführt und sind seitlich an einem Tragwerk über einen Schwenkarm befestigt.

Sauerstoff und Kühlmedien werden der Top-Lanze über separate Schläuche zugeführt. Die Top-Lanze wird bevorzugt als Dreiloch-Lanze ausgeführt.

In bekannter Weise können Sauerstoff, Feinkalk, Kohle, gasförmige und flüssige Brennstoffe auch durch seitlich angeordnete Lanzen dem Ofengefäß zugeführt werden.

Das bzw. die Ofengefäße werden unterhalb der gekühlten Ofenwand mit zusätzlichem ff-Material ausgemauert, gleichzeitig wird das Volumen des Ofenherdes durch eine nach unten angeordnete Vertiefung, im Bereich unterhalb der Sauerstoffblaslanze, vergrößert.

Durch Hinzufügen einer zusätzlichen Ausmauerung im unteren Bereich des Ofengefäßes und durch die Vertiefung im Ofenherd wird ein höherer Badspiegel erreicht, der eine entsprechende Eindringtiefe des Sauerstoffstrahles analog zum LD-Verfahren erlaubt und gleichzeitig einen Schutz der Ausmauerung des Ofenherdes während des Frischens mit Sauerstoff gewährleistet.

Die Ofengefäße können sowohl auf einer verzahnten Kippwiege mit entsprechender Ablaufbahn als auch nach der DE 42 44 228 auf nichtverzahnten, gleitenden Kippwiegen, die jeweils auf mindestens zwei Rollen ablaufen, verlagert sein, damit der Ofen während des Abschlackens bis zu -10° gekippt werden kann, ohne daß die auf der Schwenkvorrichtung angeordneten nicht mitkippenden Elektroden und die nicht mitkippende Blaslanze beschädigt werden, da bei den bekannten Lichtbogenöfen mit verzahnter Kippwiege die Deckel-Hub- und Schwenkvorrichtung auf der mitkippenden Ofenbühne angeordnet ist.

Die Ofendeckel können anstelle eines Schwenkwerkes an einem Deckelfahrwerk, auf denen auch die Sauerstoffblaslanze (Top-Lanze) angebracht sein kann, in einer Hub- und Senkvorrichtung befestigt und jeweils seitlich vom Ofengefäß entfernt werden. Diese Lösung erfordert jedoch einen zusätzlichen komplett ausgerüsteten Elektrodendeckel, der auf der Schwenkvorrichtung befestigt ist und jeweils auf Ofengefäß I oder II abgesenkt werden kann. Die seitlich verfahrbaren Ofendeckel weisen lediglich in der Mitte eine Öffnung zur Durchführung der Top-Lanze auf. Die Zusatzdeckel mit der verfahrbaren bzw. schwenkbaren Tragvorrichtung können bei dieser Lösung entfallen.

Schließlich kann die Doppelofen-Gefäßanlage auch als Gleichstrom-Lichtbogenofen betrieben werden, wobei die Ofengefäße jeweils mit nur einer Deckelelektrode (Kathode) und mit einer Bodenelektrode (Anode) im Ofenherd ausgerüstet werden.

Das erfindungsgemäße Verfahren zur Herstellung von Stahl im Lichtbogenofen durch Einsatz von flüssigem Roheisen im Verbund mit Eisenschwamm und/oder Schrott, bei gleichzeitiger Zugabe von Sauerstoff und Kalk, wird in einer sogenannten Konverter/BOF- und Lichtbogenofen-/EAF-Phase durchgeführt.

Während in Ofengefäß I zunächst nach der Konverter-/BOF-Phase gearbeitet wird - Frischen des flüssigen Roheisens mit Sauerstoff, Kühlmitteln und Kalk -, läuft in Ofengefäß II die Lichtbogenofen-/EAF-Phase, d. h. Einschmelzen von Eisenschwamm/Schrott, Kalk- und evtl. Kohlezugabe bei verminderter Sauerstoffzufuhr, ab.

Nach Beendigung der jeweiligen Verfahrensschritte in einem der beiden Ofengefäße werden in den beiden Ofengefäßen jeweils die nächsten Phasen der Stahlherstellung durchgeführt.

In den beiden jeweils zeitlich parallel ablaufenden Phasen werden in den beiden Gefäßen im einzelnen folgende Verfahrensschritte durchgeführt:

### Ofengefäß I: Konverter/BOF-Phase

a) Desoxidation der Restschlacke und des Sumpfes, Chargieren von flüssigem Roheisen bis zu einem Anteil von 70 % des metallischen Gesamteinsatzes auf den verbliebenen Restsumpf,
b) Frischen mit Sauerstoff über eine Sauerstoffblaslanze (Top-Lanze) durch den Ofendeckel bei gleichzeitiger Zugabe von Eisenschwamm, Erz oder Schrott entsprechend der Wärmebilanz für Ofengefäß I sowie kontinuierliche Zugabe von Kalk für die metallurgischen Arbeiten, wie Entsilizieren, Entphosphoren, Entschwefeln,
c) Kontinuierliches Teil-Abschlacken und/oder Teil-Abschlacken bei Blasunterbrechung oder Blasende der flüssigen Ofenschlacke durch die Schlackentür bei leicht gekipptem Ofengefäß mit nachfolgender Probenahme und Temperaturmessung der Schmelze,
d) Abschwenken der Sauerstoffblaslanze (Top-Lanze) und Ausfahren des Zusatzdeckels auf dem Ofendeckel.

### Ofengefäß II: Lichtbogenofen/EAF-Phase

a) Einschwenken der auf einer Schwenkvorrichtung angeordneten Elektroden mit den an einem Transformator angeschlossenen Hochstromleitungen,
b) Beaufschlagen der Elektroden mit Strom bei gleichzeitiger Zugabe von Eisenschwamm, Erz, Schrott oder anderen metallischen Einsatzstoffen bis zum Erreichen des Abstichgewichtes sowie weiteres Einblasen von Sauerstoff- und Kalkzugabe während des Einschmelz- und Überhitzungsvorganges.
c) Kontinuierliches Teil-Abschlacken und/oder Teil-Abschlacken während des Schmelzprozesses oder nach Beendigung des Schmelzprozesses der flüssigen Ofenschlacke durch die Schlackentür bei leicht gekipptem Ofengefäß mit Probenahme und Temperaturmessung,
d) Überhitzen der Schmelze mit nachfolgender Temperaturmessung,
e) Abstich der Schmelze in eine Stahlgießpfanne, wobei ein Teil der Schmelze als Sumpf im Ofengefäß verbleibt,
f) Wartungsarbeiten am Ofengefäß, danach Chargieren von flüssigem Roheisen auf den Restsumpf und Weiterbehandlung der metallischen Einsatzmaterialien, wie unter Punkt a - d für Ofengefäß I beschrieben.

In Ofengefäß II wird jetzt die Konverter/BOF-Phase, in Ofengefäß I wird jetzt die Lichtbogenofen-/EAF-Phase durchgeführt.

Ein Ausführungsbeispiel der erfindungsgemäßen Vorrichtung wird anhand von schematischen Zeichnungen näher erläutert.

Es zeigen:
- Fig. 1: eine Seitenansicht des Ofengefäßes,
- Fig. 2: eine Draufsicht auf die Doppelgefäßanlage,
- Fig. 3: eine Draufsicht auf die Doppelgefäßanlage im Betriebszustand,
- Fig. 4: eine Draufsicht auf die Doppelgefäßanlage mit einem Deckel-Fahrwerk,
- Fig. 5: eine Draufsicht auf die Doppelgefäßanlage im Betriebszustand mit einem Deckel-Fahrwerk.

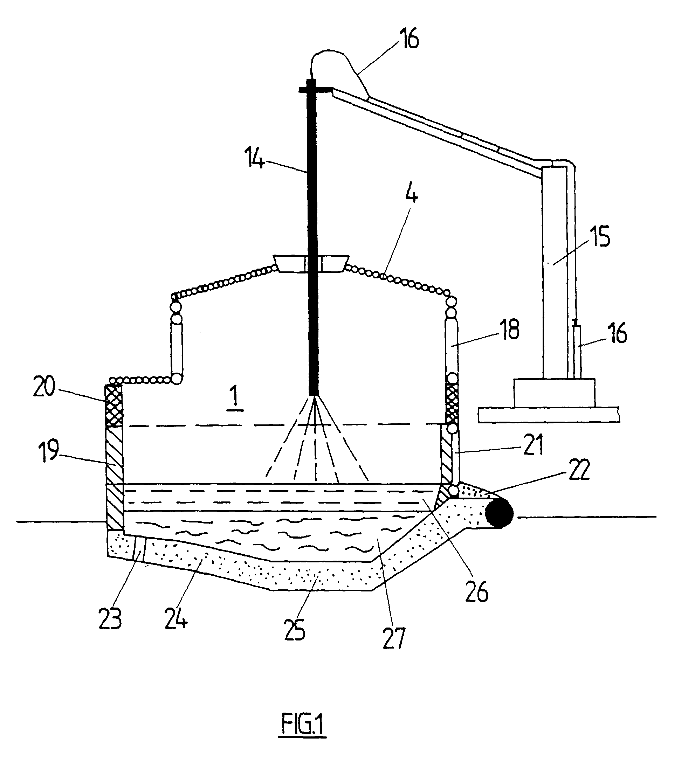

Der in Fig. 1 dargestellte Lichtbogenofen (1) zeichnet sich gegenüber einem herkömmlichen Lichtbogenofen durch eine Vertiefung (25) des Ofengefäßes (1) im Herd (24) sowie durch eine erhöhte Ausmauerung (20) des Ofengefäßes (1) oberhalb der Trennfuge aus.

Durch diese Maßnahme wird das ausgemauerte Ofenvolumen für die Konverter- bzw. BOF-Phase soweit vergrößert, daß beim Einblasen von Sauerstoff und Feinkalk über die heb- und senkbare Blaslanze (14, 15, 16) der Reaktionsraum für die Schlacke (26) und der Schmelze (27) ausreichend groß dimensioniert ist.

Das Ofengefäß wird in bekannter Weise im oberen Teil mit wassergekühlten Wandelementen (18) und einem wassergekühlten Ofendeckel (4) ausgerüstet, im unteren Teil, in Höhe der wassergekühlten Schlackentür (21) und des Vorwärmers (22) werden die Gefäßwände (19, 20) sowie Abstich (23), Herd (24) und Vertiefung (25) mit feuerfestem Material zugestellt.

Der Ofendeckel (4) kann durch eine nicht dargestellte Deckel-, Hub- und Schwenkvorrichtung bzw. alternativ durch ein verfahrbares Deckel-Fahrwerk angehoben und aus dem Bereich des Ofengefäßes (1) geschwenkt bzw. verfahren werden.

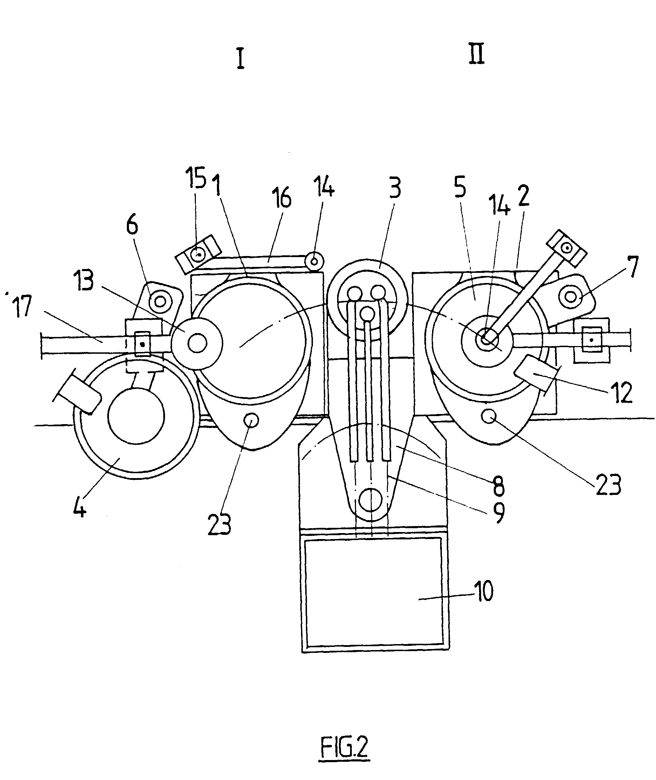

Fig. 2 zeigt eine Draufsicht auf die Doppel-Gefäßanlage mit den beiden Gefäßen (1, 2), den auf einer Schwenkvorrichtung (8, 9) angebrachten Elektroden (3), den schwenkbar angeordneten Ofendeckeln (4, 6), (5, 7), der Blaslanze (14, 15, 16) und den Abgasstutzen (11, 12) zu den Abgasleitungen zu einer Entstaubungsanlage.

An einer Deckeltragvorrichtung (17) ist ein Zusatzdeckel (13) angeordnet, der eine Öffnung im Ofendeckel (4, 5) verschließt, wenn mit der Blaslanze (14) anstelle der auf der Schwenkvorrichtung (8, 9) angeordneten Elektroden (3) gearbeitet wird.

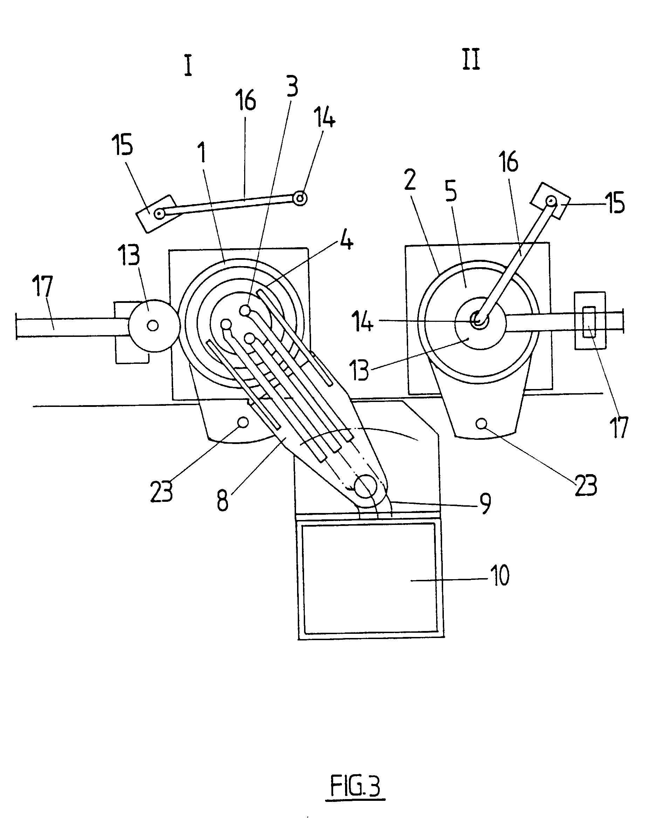

Fig. 3 zeigt eine Draufsicht auf eine Doppelgefäßanlage im Betriebszustand.

Ofengefäß I (1) arbeitet in der Lichtbogenofen-/ EAF-Phase mit in den Ofendeckel (4) auf der Schwenkvorrichtung (8, 9) eingeschwenkten Elektroden (3), Ofengefäß II (2) arbeitet in der Konverter-/BOF-Phase und ist durch den schwenkbaren Ofendeckel (5, 7) mit der Top-Lanze (14, 16) sowie durch einen Zusatzdeckel (13) abgedeckt.

Das Abstichloch (23) der beiden Schmelzgefäße (1, 2) ist parallel in Richtung Stromzuführung (9) und Transformator (10) angeordnet.

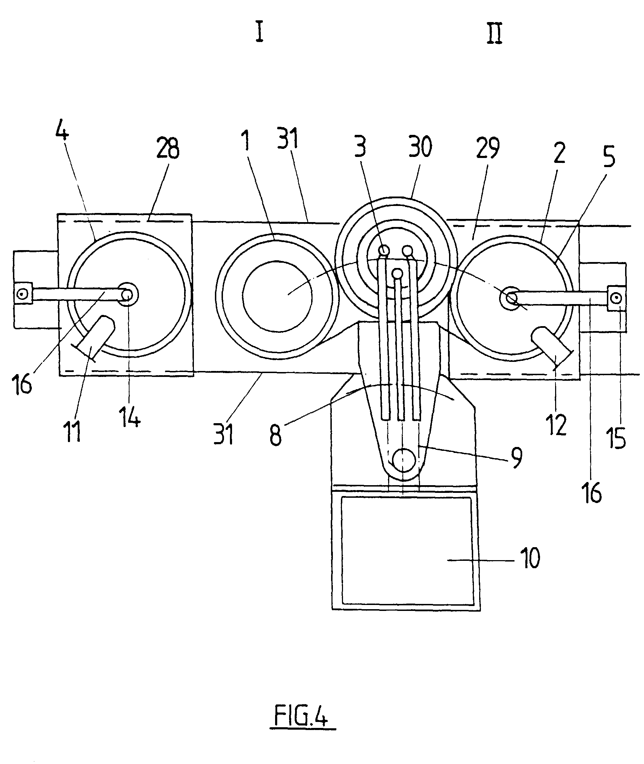

Fig. 4 zeigt eine Draufsicht auf eine Doppelgefäßanlage (1, 2) mit einem Deckelfahrwerk (28, 29), an denen die Ofendeckel (4, 6) und die Blaslanze (14, 15, 16) auf Schienen (31) verfahrbar angeordnet sind.

Das Deckelfahrwerk (28) mit dem Ofendeckel (4) von Ofengefäß (1) ist seitlich abgefahren, das Ofengefäß (1) ist offen, so daß die Schwenkvorrichtung (8) mit dem Elektrodendeckel (30) auf das Ofengefäß (1) einschwenken kann.

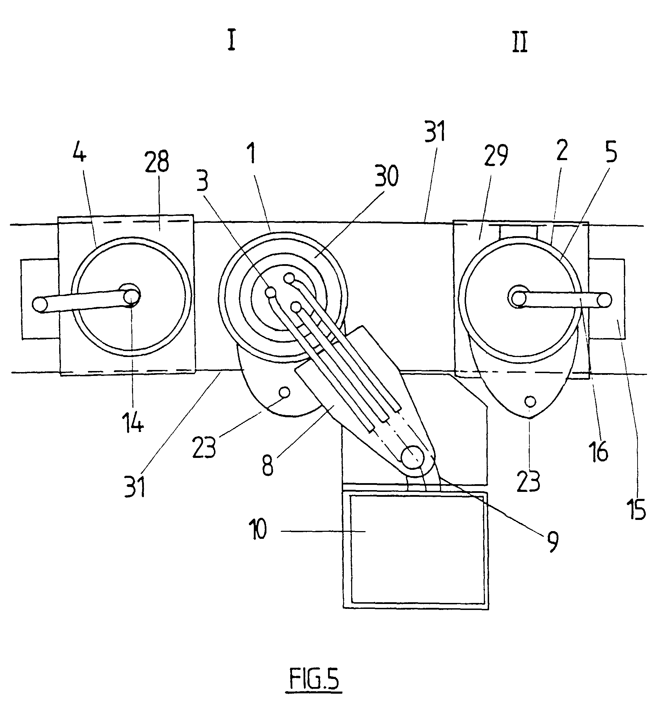

Fig. 5 zeigt eine Draufsicht auf eine Doppelgefäßanlage (1, 2) mit einem auf Schienen (31) verfahrbaren Deckelfahrwerk (28, 29) im Betriebszustand.

Der Elektrodendeckel (30) liegt auf dem Ofengefäß (1) auf, das Deckel-Fahrwerk (28) mit der Top-Lanze (14) ist seitlich abgefahren, das Ofengefäß (1) arbeitet in der Lichtbogenofen-/BOF-Phase.

Ofendeckel (5) liegt auf Ofengefäß (2) auf, über die Top-Lanze (14, 15, 16) wird Sauerstoff geblasen, um das eingefüllte Roheisen zu frischen, Ofengefäß (2) arbeitet in der Konverter-/BOF-Phase.

### Bezugsziffernliste:

- 1: Ofengefäß I
- 2: Ofengefäß II
- 3: Elektroden
- 4: Ofendeckel I
- 5: Ofendeckel II
- 6: Deckel-Schwenkwerk I
- 7: Deckel-Schwenkwerk II
- 8: Schwenkvorrichtung für 3
- 9: Stromzuführung
- 10: Transformator
- 11: Abgasstutzen Ofen I
- 12: Abgasstutzen Ofen II
- 13: Zusatzdeckel
- 14: Blaslanze/Toplanze
- 15: Lanzen-Hub- und Senkvorrichtung
- 16: Medienzuführung
- 17: Deckel-Tragvorrichtung
- 18: Gekühlte Ofenwand
- 19: Ausmauerung
- 20: Zusatz-Ausmauerung
- 21: Schlackentür
- 22: Vorwärmer
- 23: Abstichloch
- 24: Ofenherd
- 25: Vertiefung im Ofenherd
- 26: Ofenschlacke
- 27: Schmelze
- 28: Deckel-Fahrwerk I
- 29: Deckel-Fahrwerk II
- 30: Ofendeckel mit Elektroden
- 31: Schienen

## Patentansprüche

1. Verfahren zum Betreiben eines Doppelgefäß-Lichtbogenofens, zur Stahlherstellung, wobei eines der beiden Ofengefäße, I oder II, vollständig vom Stromnetz getrennt wird, das zweite Ofengefäß jedoch am Stromnetz verbleibt; das vom Stromnetz genommene Ofengefäß mit flüssigem Roheisen, Schrott und anderen metallischen Einsatzstoffen beschickt, anschließend mit einem Ofendeckel verschlossen und mit Sauerstoff gefrischt wird, während das am Stromnetz befindliche Ofengefäß weitere metallurgische Arbeiten wie Einschmelzen und Überhitzen mittels Elektroden bis zum Abstich der Schmelze durchführt, gekennzeichnet durch folgende Verfahrensschritte für Ofengefäß I oder II:
Für Ofengefäß I:
a) Desoxydation der Restschlacke und des Sumpfes, Chargieren von flüssigem Roheisen bis zu einem Anteil von 70 % vom metallischen Einsatz in Ofengefäß I (1),
b) Blasen von Sauerstoff über eine Blaslanze (14) von oben durch den Ofendeckel (4) bei gleichzeitiger Zugabe von Kühlmitteln wie z. B. Erz, Schrott, Eisenschwamm oder anderen metallischen Einsatzstoffen entsprechend der Wärmebilanz des Blasprozesses sowie Zugabe von Schlackenbildnern, z. B. Kalk, Dolomit u. a., entsprechend der Analyse der metallischen Einsatzstoffe,
c) Kontinuierliches Abschlacken und/oder Teil-Abschlacken bei Blasunterbrechung bzw. bei Blasende der Ofenschlacke (26) durch die Schlackentür (21) und über den Vorwärmer (22) während Verfahrensschritt b),
d) Ausfahren und Abschwenken der Blaslanze (14, 16) von Ofengefäß I (1),
e) Einschwenken der auf einer Schwenkvorrichtung (8) angeordneten und mit einer Hochstromleitung (9) vom Transformator (10) verbundenen Elektroden (3) auf Ofengefäß I (1),
f) Beaufschlagen der Elektroden (3) von Ofengefäß I (1) mit Strom bei gleichzeitiger Zugabe der restlichen metallischen Einsatzstoffe (Erz, Schrott, Eisenschwamm oder anderen) bis zum Erreichen des Abstichgewichtes sowie Kalkzugabe und weiteres Einblasen von Sauerstoff durch Seitenlanzen während des Einschmelz- und Überhitzungsvorganges,
g) Kontinuierliches Teil-Abschlacken und/oder Teil-Abschlacken während des Prozesses bzw. während des Prozessendes der Ofenschlacke (26) durch die Schlackentür (21) und über den Vorwärmer (22) während Verfahrensschritt f) mit abschließendem Überhitzen der Schmelze (27).
h) Abstich der Schmelze (27) in eine Stahlgießpfanne durch das Abstichloch (23), wobei ein Anteil der Schmelze (27) als Sumpf im Herd (24, 25) von Ofengefäß I (1) verbleibt.
Für Ofengefäß II:
- Durchführung der Verfahrensschritte e - h in Ofengefäß II (2) parallel zu dem Ablauf der Verfahrensschritte a - d in Ofengefäß I (1).
- Durchführung der Verfahrensschritte a - d in Ofengefäß II (2) parallel zu dem Ablauf der Verfahrensschritte e - h in Ofengefäß I (1).

2. Doppelgefäß-Lichtbogenofen, wobei die Ofengefäße I und II durch Ofendeckel verschließbar sind, mit auf einer Schwenkvorrichtung angeordneten Elektroden, mit Einblaslanzen für Sauerstoff, Kohle, Kalk, gasförmige oder flüssige Brennstoffe, zur Durchführung des Verfahrens nach Anspruch 1,
dadurch gekennzeichnet,
daß für jedes Ofengefäß (1, 2) eine einzige Schwenkvorrichtung (8, 9) mit Elektroden (3) und daß für jeden Ofendeckel (4, 5) eine Lanzen-Hub- und Senkvorrichtung (15) für eine Blaslanze (14, 16) angeordnet ist,
daß der Herd (24) des Ofengefäßes (1, 2) eine Vertiefung (25) aufweist,
und daß die mit ff-Material zugestellten Seitenwände (19) des Ofengefäßes (1, 2) mit einer umlaufenden, darüber angeordneten Zusatzmauerung (20) versehen sind.

3. Doppelgefäß-Lichtbogenofen nach Anspruch 2,
dadurch gekennzeichnet,
daß mittig auf die Ofendeckel (4, 5) ein an einer verfahrbaren Tragvorrichtung (17) befestigter Zusatzdeckel (13) auflegbar ist.

4. Doppelgefäß-Lichtbogenofen nach Anspruch 2,
dadurch gekennzeichnet,
daß die Ofendeckel (4 und 5) mittels eines Deckelfahrwerkes (28, 29) von Ofengefäß I und II (1, 2) entfernbar sind.

5. Doppelgefäß-Lichtbogenofen nach Anspruch 2,
dadurch gekennzeichnet,
daß die heb- und senkbare, wassergekühlte Blaslanze (14, 16) als Mehr-Loch-Lanze ausgebildet ist.

6. Doppelgefäß-Lichtbogenofen nach Anspruch 2,
dadurch gekennzeichnet,
daß zusätzliche Blaslanzen in bekannter Weise durch die gekühlte Ofenwand (18), durch die ausgemauerten Ofenwände (19, 20) und/oder durch die Schlackentür (21) in das Ofengefäß I, II (1, 2) eingeführt werden.

7. Doppelgefäß-Lichtbogenofen nach Anspruch 2,
dadurch gekennzeichnet,
daß die Ofengefäße I und II (1, 2) mit den Ofendeckeln (4, 5) mit nur einer Elektrode (3) auf der Schwenkvorrichtung (8) und mit einer Bodenelektrode im Ofenherd (24, 25) als Gleichstrom-Lichtbogenofen ausgerüstet sind.

## Claims

1. Process for running a twin-vessel arc furnace for steel production, whereby one of the two furnace vessels, I or II, is completely disconnected from the electric circuit but the second furnace vessel remains connected to the electric circuit; the furnace vessel disconnected from the electric circuit is loaded with liquid pig iron, scrap iron and other metallic charge materials, then closed with a furnace cover and oxidated, while the furnace vessel connected to the electric circuit performs further metallurgic operations such as smelting down and superheating by means of electrodes until the tapping of the melt,
characterized by the following processing steps for furnace vessel I or II:
For furnace vessel I:
a) deoxidizing of the residual slag and of the pool, charging of liquid pig iron up to a proportion of 70 % of the metallic charge in furnace vessel I (1),
b) blowing of oxygen via a blowing lance (14) from above through the furnace cover (4) with simultaneous addition of cooling materials, e.g. ore, scrap iron, sponge iron or other metallic charge materials according to the thermal balance of the blowing process, as well as addition of slag-forming additives, e.g. lime, dolomite etc., according to the analysis of the metallic charge materials,
c) continuous slagging off and/or partial slagging off during interruption of the blowing or at the end of the blowing respectively of the furnace slag (26) through the slag door (21) and via the economizer (22) during process step b),
d) retraction and slewing away of the blowing lance (14, 16) of furnace vessel I (1),
e) slewing in of the electrodes (3) located on a slewing device (8) and connected with a high-current line (9) from the transformer (10) onto furnace vessel I (1),
f) charging the electrodes (3) of furnace vessel I (1) with current with simultaneous addition of the remaining metallic charge materials (ore, scrap iron, sponge iron or others) until attainment of the tapping weight as well as lime addition and further blowing in of oxygen through lateral lances during the melting down and superheating process,
g) continuous partial slagging off and/or partial slagging off during the process or during the process end respectively of the furnace slag (26) through the slag door (21) and via the economizer (22) during process step f) with concluding superheating of the melt (27).
h) tapping of the melt (27) into a steel casting ladle through the tapping hole (23), whereby one part of the melt (27) remains as a pool in the hearth (24, 25) of furnace vessel I (1).
For furnace vessel II :
- execution of process steps e through h in furnace vessel II (2) parallel to the sequence of process steps a through d in furnace vessel I (1),
- execution of process steps a through d in furnace vessel II (2) parallel to the sequence of process steps e through h in furnace vessel I (1).

2. Twin-vessel arc furnace, whereby furnace vessels I and II are closable with furnace covers, with electrodes located on a slewing device, with blow-in lances for oxygen, coal, lime, gaseous or liquid fuels, for execution of the process according to claim 1,
characterized in that
one single slewing device (8, 9) with electrodes (3) is located for each furnace vessel (1, 2) and that a lance lifting and lowering device (15) for a blowing lance (14, 16) is located for each furnace cover (4, 5),
that the hearth (24) of the furnace vessel (1, 2) has a depression (25),
and that the side walls (19) of the furnace vessel (1, 2) blocked with refractory material are equipped with all-round additional walling (20) located over them.

3. Twin-vessel arc furnace according to claim 2,
characterized in that
an ancillary cover (13) attached to a moveable supporting device (17) is placeable centrically onto the furnace covers (4, 5).

4. Twin-vessel arc furnace according to claim 2,
characterized in that
the furnace covers (4 and 5) are removable from furnace vessel I and II by means of cover traversing gear (28, 29).

5. Twin-vessel arc furnace according to claim 2,
characterized in that
the liftable and lowerable, water-cooled blowing lance (14, 16) is configured as a multi-hole lance.

6. Twin-vessel arc furnace according to claim 2,
characterized in that
additional blowing lances are inserted by known means through the cooled furnace wall (18), through the brick-lined furnace walls (19, 20) and/or through the slag door (21) into the furnace vessel I, II (1,2).

7. Twin-vessel arc furnace according to claim 2,
characterized in that
the furnace vessels I and II (1, 2) with the furnace covers (4, 5) are equipped with only one electrode (3) on the slewing device (8) and with a hearth electrode in the furnace hearth (24, 25) as a direct current arc furnace.

## Revendications

1. Procédé pour opérer un four à arc à deux cuves pour la production d'acier, une des deux cuves du four, I ou II, étant complètement séparée du réseau de courant, la deuxième restant toutefois raccordée au réseau ; la cuve isolée du réseau de courant étant chargée de fonte brute liquide, de ferrailles et d'autres substances de charge métalliques, puis fermée à l'aide d'un couvercle de four et revivifiée avec de l'oxygène, alors que la cuve raccordée au réseau de courant réalise d'autres travaux métallurgiques, tels que la fonte et la surchauffe à l'aide d'électrodes jusqu'à la percée du bain de fusion, caractérisé par les étapes de procédé pour les cuves de four I et Il suivantes :
Pour la cuve I :
a) Désoxydation des scories résiduelles et du fond, charge la fonte brute liquide jusqu'à une proportion de 70 % de charge métallique dans la cuve de four I (1),
b) Soufflage d'oxygène via une lance de soufflage (14) à partir du haut à travers le couvercle du four (4) avec addition simultanée d'agents de refroidissement, tels que par exemple du minerai, des scories, de l'éponge de fer ou d'autres substances de charge métalliques, en fonction du bilan thermique du processus de soufflage, ainsi qu'addition d'agents de formation de scories, par exemple du calcaire, de la dolomie, en fonction de l'analyse des substances métalliques,
c) Evacuation continue et/ou partielle des scories du four (26) en interrompant le soufflage ou à la fin du soufflage, à travers la porte à scories (21) et via le préchauffage (22) pendant l'étape de procédé b),
d) Evacuation et pivotement de la lance de soufflage (14, 16) en l'écartant de la cuve de four I (1),
e) Pivotement sur la cuve de four I (1) des électrodes (3) disposées sur un dispositif de pivotement (8) et reliées à une ligne haute tension (9) du transformateur (10),
f) Alimentation des électrodes (3) de la cuve de four I (1) avec du courant avec addition simultanée des substances de charge métalliques résiduelles (minerai, scories, éponge de fer ou autres) jusqu'à atteindre le poids de percée du four ainsi qu'addition de calcaire et soufflage supplémentaire d'oxygène à travers les lances latérales pendant le processus de fonte et de surchauffe,
g) Evacuation partielle continue et/ou évacuation partielle des scories du four (26) pendant le processus ou pendant la fin du processus à travers la porte à scories (21) et via le préchauffage (22) pendant l'étape de procédé (f), en terminant la surchauffe du bain de fusion (27)
h) Percée du bain de fusion (27) dans une poche de coulée d'acier via le trou de percée (23), une partie du bain de fusion (27) restant comme fond dans le creuset (24, 25) de la cuve de four I (1),
pour la cuve de four II
- Réalisation des étapes de procédé e-h dans la cuve de four II (2) parallèlement au déroulement des étapes de procédé a-d dans la cuve de four I(1),
- Réalisation des étapes de procédé a-d dans la cuve de four II (2) parallèlement au déroulement des étapes de procédé e-h dans la cuve de four I (1).

2. Four à arc à deux cuves, les cuves de four I et II pouvant être fermées par des couvercles de four, présentant des électrodes disposées sur un dispositif de pivotement, des lances de soufflage pour l'oxygène, le charbon, le calcaire, des combustibles gazeux ou liquides, pour la réalisation du procédé selon la revendication 1, caractérisé en ce qu'on a disposé, pour chaque cuve de four (1, 2), un seul dispositif de pivotement (8, 9) présentant des électrodes (3) et pour chaque couvercle de four (4, 5) un dispositif d'élévation et d'abaissement de lances (15) pour une lance de soufflage (14, 16), en ce que le creuset (24) de la cuve de four (1, 2) présente une partie plus creuse (25) et en ce que les parois latérales (19), réalisées en matériau réfractaire, de la cuve de four (1, 2) sont pourvues d'une maçonnerie supplémentaire (20) périphérique autour de celles-ci.

3. Four à arc à deux cuves selon la revendication 2, caractérisé en ce qu'on peut placer, au milieu sur le couvercle du four (4, 5), un couvercle supplémentaire (13) fixé sur un dispositif de support (17) mobile.

4. Four à arc à deux cuves selon la revendication 2, caractérisé en ce que le couvercle de four (4, 5) peut être enlevé à l'aide d'un dispositif de déplacement (28, 29) du couvercle de la cuve de four I et II (1, 2).

5. Four à arc à deux cuves selon la revendication 2, caractérisé en ce que les lances de soufflage, pouvant être élevées et abaissées et refroidies à l'eau (14, 16) sont exécutées sous forme de lances à plusieurs trous.

6. Four à arc à deux cuves selon la revendication 2, caractérisé en ce que des lances de soufflage supplémentaire sont guidées, de manière connue, à travers la paroi du four (18) refroidie, à travers les parois revêtues de maçonnerie du four (19, 20) et/ou à travers la porte à scories (21), dans la cuve de four I, II (1, 2).

7. Four à arc à deux cuves selon la revendication 2, caractérisé en ce que les cuves à four I et II (1, 2) avec les couvercles de four (4, 5) ne sont équipées que d'une seule électrode (3) sur le dispositif de pivotement (8) et d'une électrode de fond dans le creuset du four (24, 25) comme four à arc à courant continu.
